# EUROPEAN PATENT APPLICATION

(11) **EP 4 756 555 A1**
(43) Date of publication of application: **10.06.2026**
(21) Application number: 24847668.1
(22) Date of filing: 25.04.2024
(51) Int. Cl.: G05D 1/43

(54) **METHOD AND APPARATUS FOR CONTROLLING SELF-MOVING DEVICE, AND SELF-MOVING DEVICE**

(30) Priority: 03.08.2023 CN 202310973639; 25.09.2023 CN 202311244527; 27.11.2023 CN 202311595992
(71) Applicant: Positec Power Tools (Suzhou) Co., Ltd., Suzhou, Jiangsu 215123 (CN)
(72) Inventor: LU, Shuailong, Suzhou, Jiangsu 215123 (CN); QIN, Wei, Suzhou, Jiangsu 215123 (CN)
(74) Representative: Kilburn & Strode LLP
(86) International application number: PCT/CN2024/089707
(87) International publication number: WO 2025/025702

(57) **Abstract**

The present application relates to a control method and an apparatus for a self-moving device, and a self-moving device. The method comprises: acquiring a working area map; acquiring position information, the position information comprising a current position and a target position of the self-moving device; when the current position and the target position satisfy a preset position relationship, planning a travel path from the current position to the target position based at least on a parallel path, the parallel path representing a path substantially parallel to a preset cutting direction of the self-moving device in a working area; and controlling the self-moving device to move to the target position according to the travel path. The method can reduce damage to light and dark stripes created by wheels of the self-moving device, ensuring overall aesthetics.

## Description

### TECHNICAL FIELD

The present application relates to the field of self-moving device control technology, and particularly relates to a control method and an apparatus for a self-moving device, and a self-moving device.

### Background

With continuous progress in computer technology and artificial intelligence technology, applications of self-moving devices (such as lawn mowers, vacuum cleaners, etc.) have become increasingly widespread. Smart lawn mowers, for example, can automatically help people maintain lawns, liberating people from tedious, time-consuming, and labor-intensive lawn maintenance chores, and therefore have gained great popularity.

Currently, when using a self-moving device to complete a set work task, a scenario is encountered where movement from a current position to a designated position is required, for example, transferring an area, returning, etc. In such a scenario, a path from the current position pointing to the designated position is typically generated based on the current position, the designated position, and a working area map, and then the self-moving device is controlled to move to the designated position according to the path. However, based on this approach, during the process of moving to the designated position, light and dark stripes created by wheels of the self-moving device are damaged, thereby affecting aesthetics.

### Summary

To overcome defects of the prior art, the present application provides a control method and an apparatus for a self-moving device, and a self-moving device, which can reduce damage to light and dark stripes created by wheels of the self-moving device, ensuring overall aesthetics.

According to a first aspect of embodiments of the present application, there is provided a control method for a self-moving device, the self-moving device being configured to move and/or operate in a working area, the method comprising:
acquiring a working area map; the working area map is configured to define the working area of the self-moving device;
acquiring position information; the position information comprises a current position and a target position of the self-moving device;
when the current position and the target position satisfy a preset position relationship, planning a travel path from the current position to the target position based at least on a parallel path; the parallel path represents a path substantially parallel to a preset cutting direction of the self-moving device in the working area; and
controlling the self-moving device to move to the target position according to the travel path.

In one embodiment, satisfying the preset position relationship by the current position and the target position comprises that a straight-line distance between the current position and the target position is greater than a first threshold.

In one embodiment, when the current position and the target position satisfy the preset position relationship, planning a travel path from the current position to the target position based at least on a parallel path comprises:
determining a working mode in which the self-moving device is currently operating; and
when the working mode is a first preset mode, planning the travel path from the current position to the target position based on the parallel path and a boundary of the working area.

In one embodiment, determining the working mode in which the self-moving device is currently operating comprises:
receiving a control instruction indicating the working mode of the self-moving device; and
comparing the control instruction with a prestored instruction to determine the working mode in which the self-moving device is currently operating; the self-moving device prestores a correspondence relationship between the working mode and the control instruction.

In one embodiment, planning the travel path from the current position to the target position based on the parallel path and the boundary of the working area comprises:
acquiring a preset distance range for adjusting the boundary of the working area;
determining a first distance based on the preset distance range;
relative to the working area, performing inward contraction processing on the boundary of the working area according to the first distance to obtain an inwardly contracted area; and
planning the travel path from the current position to the target position based on the parallel path where the current position is located, the parallel path where the target position is located, and a boundary of the inwardly contracted area.

In one embodiment, the method further comprises:
when the working mode is a second preset mode, planning the travel path from the current position to the target position based on the parallel path and a perpendicular path; wherein the perpendicular path represents a path substantially perpendicular to the preset cutting direction.

In one embodiment, planning the travel path from the current position to the target position based on the parallel path and the perpendicular path comprises:
acquiring the parallel path between the current position and the target position; the parallel path at least comprises the parallel path where the current position is located and the parallel path where the target position is located;
randomly generating at least one perpendicular path between the current position and the target position; and
planning the travel path from the current position to the target position based on the perpendicular path and the parallel path between the current position and the target position.

**In** one embodiment, the method further comprises:
when the current position and the target position do not satisfy the preset position relationship, determining a shortest path between the current position and the target position as the travel path from the current position to the target position.

**In** one embodiment, controlling the self-moving device to move to the target position according to the travel path comprises:
acquiring a positioning signal received by the self-moving device;
when the positioning signal does not satisfy a preset quality condition, controlling the self-moving device to move to a recovery position, the recovery position being a position where a quality of the positioning signal satisfies the preset quality condition;
when confirming movement to the recovery position, recording the recovery position as the current position, and determining whether the current position and the target position satisfy the preset position relationship; and
when the preset position relationship is satisfied, planning the travel path from the current position to the target position based at least on the parallel path.

In one embodiment, controlling the self-moving device to move to the target position according to the travel path comprises:
acquiring a positioning signal received by the self-moving device; and
when the positioning signal does not satisfy the preset quality condition, controlling the self-moving device to sleep, restart, or return to a charging station.

In one embodiment, controlling the self-moving device to move to the target position according to the travel path comprises:
when a collision with an obstacle is detected, taking a first position as the current position, and marking an obstacle position in the working area map to obtain a new working area map; the first position represents a position within a preset range of a collision position; and
when the current position and the target position satisfy the preset position relationship, planning the travel path from the current position to the target position based at least on the parallel path.

According to a second aspect of embodiments of the present application, there is provided a control method for a self-moving device, the self-moving device being configured to move and/or operate in a working area, the method comprising:
acquiring a working area map; the working area map is configured to define the working area of the self-moving device;
acquiring position information; the position information comprises a current position and a target position of the self-moving device;
planning a travel path from the current position to the target position according to the working area map and the position information; the travel path comprises a boundary of the working area and/or a parallel path; the parallel path represents a path substantially parallel to a preset cutting direction of the self-moving device in the working area; and
controlling the self-moving device to move to the target position according to the travel path.

According to a third aspect of embodiments of the present application, there is provided a control method for a self-moving device, the self-moving device being configured to move and/or operate in a working area, the method comprising:
acquiring a working area map; the working area map is configured to define the working area of the self-moving device;
acquiring position information; the position information comprises a current position and a target position of the self-moving device;
planning a travel path from the current position to the target position based on the working area map and the position information according to a working mode in which the self-moving device is currently operating; and
controlling the self-moving device to move to the target position according to the travel path.

According to a fourth aspect of embodiments of the present application, there is further provided a control apparatus for a self-moving device, the self-moving device being configured to move and/or operate in a working area, the apparatus comprising:
a first acquisition module, configured to acquire a working area map; the working area map is configured to define the working area of the self-moving device;
a second acquisition module, configured to acquire position information; the position information comprises a current position and a target position of the self-moving device;
a planning module, configured to, when the current position and the target position satisfy a preset position relationship, plan a travel path from the current position to the target position based at least on a parallel path; the parallel path represents a path substantially parallel to a preset cutting direction of the self-moving device in the working area; and
a control module, configured to control the self-moving device to move to the target position according to the travel path.

According to a fifth aspect of embodiments of the present application, there is further provided a computer-readable storage medium, the storage medium storing a computer program, the computer program being configured to execute the method described in any one of the embodiments of the present application.

According to a sixth aspect of embodiments of the present application, there is further provided a self-moving device, comprising:
a processor;
a memory, configured to store executable instructions of the processor; and
the processor, configured to execute the control method described in any one of the embodiments of the present application.

In the technical solutions provided by embodiments of the present application, by acquiring a working area map and position information including a current position and a target position of a self-moving device, when the current position and the target position satisfy a preset position relationship, a travel path from the current position to the target position is planned based at least on a parallel path, and then the self-moving device is controlled to move to the target position according to the travel path. Since the parallel path is substantially parallel to a preset cutting direction of the self-moving device in the working area, the planned travel path will not have a scenario of obliquely intersecting or chaotically intersecting with light and dark stripes created by wheels, thereby reducing damage to the light and dark stripes created by the wheels of the self-moving device and ensuring overall aesthetics.

It should be understood that the above general description and the following detailed description are merely exemplary and explanatory, and cannot limit the present application.

### Brief Description of the Drawings

The objects, technical solutions, and beneficial effects of the present application described above can be clearly obtained through the following detailed description of specific embodiments that can implement the present application, combined with the description of the accompanying drawings.

The same reference numerals and symbols in the drawings and specification are used to represent the same or equivalent elements.
Figure 1 is a schematic diagram of a working scenario provided by an embodiment of the present application;
Figure 2 is a flowchart of a control method for a self-moving device provided by an embodiment of the present application;
Figure 3 is a structural schematic diagram of a self-moving device provided by an embodiment of the present application;
Figure 4 is a schematic diagram of planning a travel path from A to B provided by an embodiment of the present application;
Figure 5 is a schematic diagram of another planning of a travel path from A to B provided by an embodiment of the present application;
Figure 6 is a schematic diagram of another planning of a travel path from A to B provided by an embodiment of the present application;
Figure 7 is a schematic diagram of another planning of a travel path from A to B provided by an embodiment of the present application;
Figure 8 is a schematic diagram of another planning of a travel path from A to B provided by an embodiment of the present application;
Figure 9 is a flowchart of another control method for a self-moving device provided by an embodiment of the present application;
Figure 10 is a flowchart of another control method for a self-moving device provided by an embodiment of the present application;
Figure 11 is a schematic diagram of components of a computer device according to an embodiment of the present application.

### Detailed Description

In order to facilitate understanding of the present application, the technical solutions in the embodiments of the present specification will be described clearly and completely below in conjunction with the drawings in the embodiments of the present specification. Obviously, the described embodiments are only part of the embodiments of the present application, not all embodiments. The purpose of providing these embodiments is to enable a more thorough and comprehensive understanding of the disclosed content of the present application. Based on the embodiments in the present application, all other embodiments obtained by those of ordinary skill in the art without making creative efforts fall within the scope of protection of the present application.

It should be noted that the terms "first", "second", etc. in the specification and claims of the present application and the above drawings are used to distinguish similar objects, and are not necessarily used to describe a specific order or sequence. It should be understood that data used in this way can be interchanged under appropriate circumstances, so that the embodiments of the present application described herein can be implemented in orders other than those illustrated or described herein. The embodiments described in the following exemplary embodiments do not represent all embodiments consistent with the present application. Rather, they are merely examples of apparatuses and methods consistent with some aspects of the present application as detailed in the appended claims. Furthermore, the terms "comprises" and "has" and any variations thereof are intended to cover non-exclusive inclusion, for example, a process, method, system, product, or server that comprises a series of steps or units is not necessarily limited to those steps or units that are clearly listed, but may include other steps or units that are not clearly listed or are inherent to these processes, methods, products, or devices. Moreover, in the absence of explicit special instructions, various technical features in the embodiments of the present application may be considered as being capable of being combined or integrated with each other, as long as such combination or integration is not technically impossible to implement.

Unless otherwise defined, all technical and scientific terms used herein have the same meaning as commonly understood by a person of ordinary skill in the art to which the present application belongs. The terms used herein in the specification of the present application are only for the purpose of describing specific embodiments and are not intended to limit the present application. The term "and/or" used herein includes any and all combinations of one or more related listed items.

With the rapid development of technology, the application of intelligent control technology in people's lives has become increasingly widespread. A self-moving device with an autonomous working capability, as an intelligent product derived from intelligent control technology, can bring convenience and efficiency to people's lives. Therefore, the self-moving device is frequently used in people's lives.

Currently, when using a self-moving device to complete a set work task, a scenario is encountered where movement from a current position to a target position is required, for example, transferring an area, returning, etc. In such a scenario, the shortest path between the current position and the target position is typically directly used as the travel path, and then the self-moving device is controlled to move to the target position according to the path.

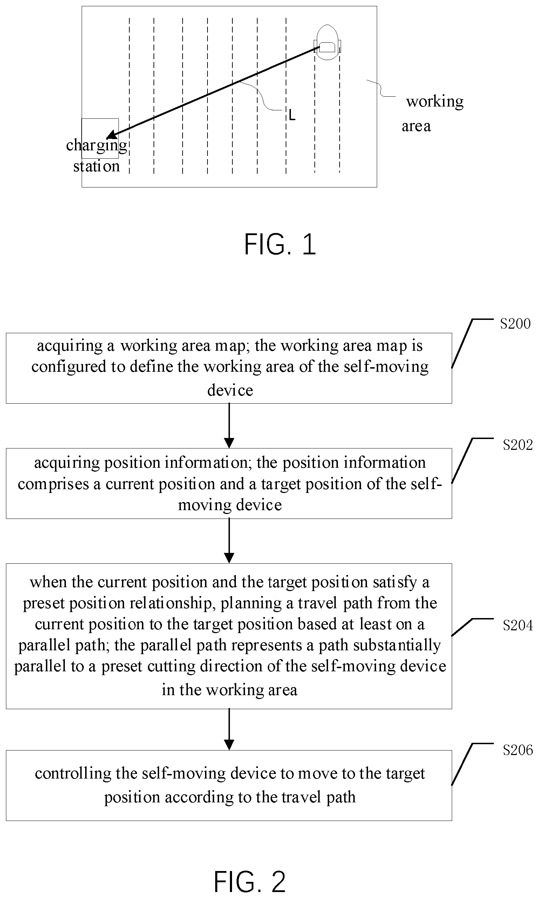

As shown in Figure 1, a self-moving device operates in a working area according to a working path (such as a Boustrophedon Path). Due to different traces between an area pressed by wheels and an area not pressed by wheels, the area after the self-moving device operates will show relatively regular light and dark stripes (dashed lines in the figure represent stripes pressed out after wheels pass). When the self-moving device has low power and needs to return from the current position to a charging station for charging, the self-moving device will generate a shortest path from the current position to the charging station based on the current position, a position of the charging station, and the working area map (such as L in Figure 1), and then control the self-moving device to return to the charging station according to the path. The self-moving device refers to a device that requires no manual power supply and can autonomously move according to an area map of the working area (i.e., a working area map). The charging station refers to a device for the self-moving device to dock and/or for charging the self-moving device. In actual implementation, the charging station can also provide other functions, such as providing docking for the self-moving device, cleaning the self-moving device, etc. This embodiment does not enumerate all functions of the charging station here.

It can be seen that in a traditional approach, when determining a path between points, to ensure that the self-moving device can quickly reach the target position (such as returning to the charging station), only the shortest generated path is considered. However, during the process of moving to the target position, this approach will damage the light and dark stripes created by wheels of the self-moving device, thereby affecting aesthetics. As shown in Figure 1, when the self-moving device moves to the charging station based on L, the self-moving device will damage the light and dark stripes created by the wheels of the self-moving device, thereby affecting aesthetics.

Based on the above problems, an embodiment of the present application provides a control method for a self-moving device, wherein the self-moving device is configured to move and/or operate in a working area. The method can be applied to a self-moving device, specifically, to a control module in the self-moving device. Of course, in some cases, the method can also be applied to a server deployed on a network side and capable of controlling an operation process of the self-moving device. As shown in Figure 2, the control method for a self-moving device provided by this embodiment may include the following steps.
S200: acquiring a working area map; the working area map is configured to define the working area of the self-moving device;
S202: acquiring position information; the position information comprises a current position and a target position of the self-moving device;
S204: when the current position and the target position satisfy a preset position relationship, planning a travel path from the current position to the target position based at least on a parallel path; the parallel path represents a path substantially parallel to a preset cutting direction of the self-moving device in the working area;
S206: controlling the self-moving device to move to the target position according to the travel path.

In some embodiments, the self-moving device may be an automatic vacuum cleaner, an automatic spraying equipment, an automatic monitoring equipment/automatic lawn mower, or other equipment suitable for unattended operation, automatically traveling on the ground or surface of a working area to complete corresponding work. It should be noted that in this embodiment, the self-moving device is described as a smart lawn mower by way of example, without limiting other implementation scenarios.

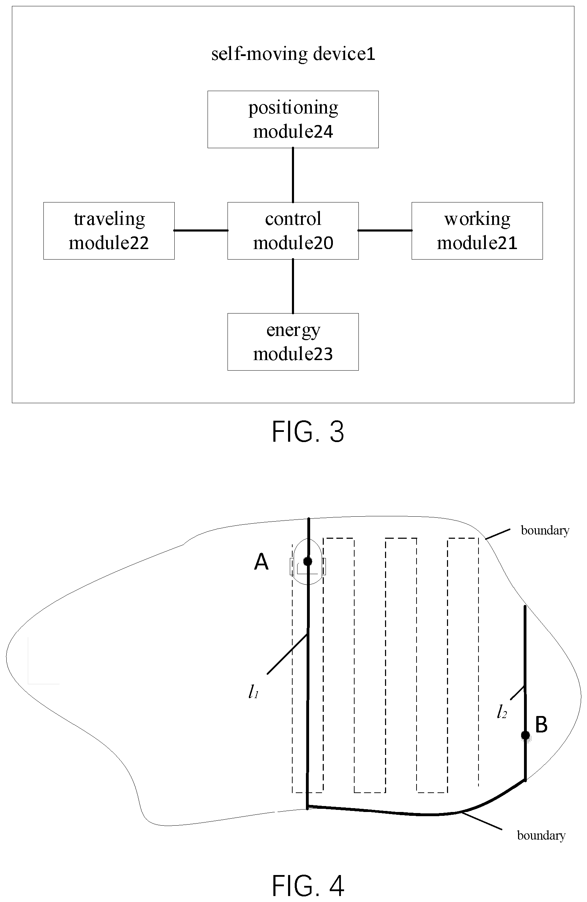

As shown in Figure 3, a self-moving device 1 comprises a control module 20, a working module 21, a traveling module 22, an energy module 23, and a positioning module 24.

The control module 20 is configured to control the self-moving device 1 to automatically travel and operate, and is a core component of the self-moving device 1. The functions the control module 20 performs include controlling the working module 21 to start working or stop, controlling the traveling module 22 to start or stop and controlling a movement direction, determining an energy of the energy module 23 and timely instructing the self-moving device 1 to return to a charging station for automatic docking and charging, etc. The control module typically includes a microcontroller and a memory as well as other peripheral circuits.

The working module 21 is configured to perform main working tasks of the self-moving device 1. If the self-moving device 1 is a smart lawn mower, the working module includes a cutting blade, a cutting motor, etc., and may also include a component such as a cutting height adjustment mechanism for optimizing or adjusting a cutting effect. If the self-moving device 1 is an automatic vacuum cleaner, the working module includes a working component for performing a vacuuming task, such as a vacuum motor, a vacuum inlet, a vacuum tube, a vacuum chamber, a dust collection device, etc.

The traveling module 22 is configured to drive the self-moving device 1 to travel within a working area 7, and typically consists of a wheel set installed on the self-moving device 1 and a traveling motor driving the wheel set. The wheel set includes a driving wheel connected to the traveling motor and an auxiliary wheel that mainly provides auxiliary support. In this embodiment, a number of the driving wheels is two, located at a rear of the self-moving device 1, each driving wheel is connected to a traveling motor, and a number of the auxiliary wheels is one or two, located at a front of the self-moving device 1.

The energy module 23 is configured to provide energy for various operations of the self-moving device 1, and includes a rechargeable battery and a charging connection structure, where the charging connection structure is typically a charging electrode.

The positioning module 24 is configured to acquire position data of the self-moving device 1. The positioning module 24 may be removably installed on the self-moving device 1, or may be fixedly installed on the self-moving device 1.

In some embodiments, the positioning module 24 may include a satellite navigation module and at least one position sensor, wherein the satellite navigation module is configured to receive a positioning signal, and the position sensor is configured to detect a feature related to a position of the positioning module 24. The positioning signal may include a Global Positioning System (GPS) signal, a Galileo satellite navigation system signal, and a BeiDou satellite navigation system signal, etc.

In some embodiments, the positioning module 24 is typically configured as a Real Time Kinematic (RTK) module, i.e., positioning is implemented based on RTK technology for real-time dynamic measurement. It can be understood that regardless of the specific positioning principle on which the positioning module is implemented, an accuracy of positioning results of the positioning module depends on a quality of a positioning signal. The higher the quality of the positioning signal, the more accurate the positioning results. Conversely, the lower the quality of the positioning signal, the less accurate the positioning results, and the positioning results may even be difficult to meet basic positioning requirements. In a practical application, especially for a positioning module that relies on a satellite navigation system, the quality of a positioning signal is easily affected by an environmental factor. For example, when a self-moving device is in an open area without an obstruction, the quality of a positioning signal of the positioning module is naturally high. Conversely, if the self-moving device is obstructed by a tree or a building, a signal strength of a positioning signal is very weak, and may even cause the positioning module to have difficulty receiving the positioning signal. In such a case, a quality of a positioning signal provided is naturally not high and may be difficult to meet a usage requirement.

In this embodiment, the positioning module 24 is an RTK module. Since a navigation method of the RTK module belongs to a dead reckoning navigation method, when a quality of a positioning signal does not satisfy a preset quality requirement, the positioning signal remains credible for a certain duration. Of course, a positioning accuracy of the positioning signal will decrease as time extends. That is to say, when the quality of the positioning signal does not satisfy the preset quality requirement, it is considered that the positioning module 24 can still provide an accurate position within a certain duration.

In some embodiments, the position sensor includes a motion or state sensor that detects a motion parameter or a state parameter. In some examples, the motion or state sensor includes an inertial navigation sensor, which may include an Inertial Measurement Unit (IMU), an accelerometer, an odometer, a gyroscope, an attitude detection sensor, etc., for detecting a velocity, an acceleration, a traveling direction, etc. of the positioning module 24. The positioning module 24 further includes a fusion processing unit, which includes at least two inputs, one of which is a positioning signal and another of which is an output of the position sensor. The fusion processing unit performs a calculation on the positioning signal and the output of the position sensor, and outputs data representing position information of the positioning module 24.

In addition to the above modules, the self-moving device 1 further includes a housing for accommodating and installing various modules, a control panel for user operation, etc. The self-moving device 1 may also include various environmental sensors, such as a humidity sensor, a temperature sensor, an acceleration sensor, a light sensor, an ultrasonic sensor, a camera, a lidar, etc. These sensors can help the self-moving device determine a working environment to execute a corresponding program.

In this embodiment, the working area map is configured to define a working area of the self-moving device. The working area map may include a working area where the self-moving device can move and a non-working area where the self-moving device cannot move. A dividing line between the working area and the non-working area can be understood as a boundary. The boundary may include an inner boundary and an outer boundary, where the outer boundary is configured to define an edge of the working area, and the inner boundary is configured to define an edge of a non-working area within the working area, such as an edge of an island or an obstacle. In this embodiment, the self-moving device can move within the working area, but cannot move within the non-working area.

In this embodiment, the position information comprises a current position and a target position of the self-moving device. The current position can be obtained through a positioning module on the self-moving device. The target position can be a position point that the self-moving device needs to reach, which can be preset according to an actual scenario. For example, in a return scenario, the target position can be a location where a charging station is located. As another example, during an area transfer, the target position can be a starting position of the working area, or can be any position in the working area. Of course, the above is merely exemplary illustration, and the present application is not limited thereto.

In some embodiments, the self-moving device may prestore a working area map, or may acquire the working area map from another device when needed, for example, from a terminal or a server that communicates with the self-moving device, which is not limited by the present application.

In some embodiments, during movement, the self-moving device may record position coordinates in real time or at an interval.

In some embodiments, the self-moving device may prestore a target position. Of course, the target position may also be temporarily determined according to an actual scenario, or may be set according to a user requirement, etc., which is not limited by the present application.

In this embodiment, after acquiring the working area map and the position information, it can be determined whether the current position and the target position satisfy the preset position relationship.

In some implementation scenarios, the current position and the target position satisfying the preset position relationship may include that a straight-line distance between the current position and the target position is greater than a first threshold. The first threshold can be set according to an actual scenario, which is not limited by the present application.

In some implementation scenarios, the current position and the target position not satisfying the preset position relationship may include that a straight-line distance between the current position and the target position is less than or equal to the first threshold.

In some implementation scenarios, the straight-line distance between the current position and the target position can be calculated through coordinate data of the current position and coordinate data of the target position. Of course, the straight-line distance between the current position and the target position can also be calculated through another method, which is not limited by the present application.

In this embodiment, when the current position and the target position satisfy the preset position relationship, a travel path from the current position to the target position can be planned based at least on a parallel path.

The parallel path represents a path substantially parallel to a preset cutting direction of the self-moving device in the working area.

The preset cutting direction can be understood as a preset traveling direction when the self-moving device performs cutting in the working area. Specifically, for example, in some implementation scenarios, when the self-moving device performs cutting according to a Boustrophedon Path in the working area, the preset cutting direction can be understood as a direction where a long side is located when the self-moving device cuts along the Boustrophedon Path. At this time, the parallel path can be understood as a path substantially parallel to the long side in the Boustrophedon Path. Of course, the self-moving device can also cut along another direction in the working area, which is not limited by the present application. The parallel path represents a passable path. In some implementation scenarios, the parallel path may include one or more paths. The parallel path may coincide with a cutting path along which the self-moving device cuts in the preset cutting direction in the working area, or may not coincide. An interval distance between multiple parallel paths may be equal or unequal. Preferably, the interval distance between multiple parallel paths is equal.

In some embodiments, before planning a travel path from the current position to the target position based at least on a parallel path when the current position and the target position satisfy the preset position relationship, it can be determined whether the current position is on a parallel path.

Specifically, in some implementation scenarios, when it is confirmed that the current position is on a parallel path, a travel path from the current position to the target position can be planned based at least on the parallel path. In some implementation scenarios, when it is confirmed that the current position is not on a parallel path, the current position or a preset range of the current position can be marked as a passable area, and then a travel path from the current position to the target position can be planned based at least on the parallel path. The preset range of the current position can be set according to an actual scenario, which is not limited herein.

In an embodiment of the present application, when the current position is not on a parallel path, by marking an area around the current position as a passable area, a machine can be prevented from being constantly trapped in place and unable to reach the target position.

In this embodiment, when the current position and the target position satisfy the preset position relationship and a travel path from the current position to the target position is planned based at least on a parallel path, the planning of the travel path from the current position to the target position can be determined according to a working mode currently corresponding to the self-moving device.

In some embodiments, when the current position and the target position satisfy the preset position relationship, planning a travel path from the current position to the target position based at least on a parallel path comprises: determining a working mode in which the self-moving device is currently operating; and when the working mode is a first preset mode, planning the travel path from the current position to the target position based on the parallel path and a boundary of the working area.

In some implementation scenarios, determining the working mode in which the self-moving device is currently operating comprises: receiving a control instruction indicating the working mode of the self-moving device; and comparing the control instruction with a prestored instruction to determine the working mode in which the self-moving device is currently operating; the self-moving device prestores a correspondence relationship between the working mode and the control instruction. The working mode includes a first preset mode and a second preset mode. In some implementation scenarios, the first preset mode may be a perfect mode, and the second preset mode may be a fast mode. In the perfect mode, the planned travel path can avoid damage to light and dark stripes, ensuring stripe aesthetics. In the fast mode, the planned travel path can improve work efficiency while considering stripe aesthetics. It should be noted that by default, the self-moving device is in the fast mode. For example, in some implementation scenarios, if a current mode of the self-moving device cannot be confirmed (for example, a communication between a user terminal and the self-moving device is interrupted, or an information setting module on the self-moving device experiences an abnormality, etc.), the self-moving device can be considered to be in the fast mode.

Specifically, in some implementation scenarios, the self-moving device can communicate with a user terminal (such as an APP), so that a user can send a control instruction indicating a working mode to the self-moving device through the user terminal. For example, a button corresponding to a working mode is set on the user terminal, and by triggering a corresponding button, the user causes the user terminal to send a control instruction indicating the working mode to the self-moving device. Further, after receiving a control instruction, the self-moving device can compare the control instruction with a prestored instruction to determine the current working mode. Since a correspondence relationship between a working mode and a control instruction is prestored in the self-moving device, after receiving a control instruction sent by the user terminal, the working mode can be determined according to the control instruction.

In other implementation scenarios, an information setting module is provided on a body of the self-moving device, and a user can set operation information of the self-moving device by operating the module, such as a working time, a working area, a working mode, etc. Specifically, a user can select a working mode of the self-moving device by operating the information setting module. When the user has selected a working mode and triggers a confirm button, a control module of the self-moving device can receive a control instruction indicating the working mode, and then the control module can compare the control instruction with a prestored instruction to determine the current working mode.

Of course, the above is merely exemplary illustration. The present application can also determine the working mode in which the self-moving device is currently operating through another method, which is not limited herein.

In some embodiments, when it is determined that the working mode is the first preset mode, a travel path from the current position to the target position can be planned based on the parallel path and the boundary of the working area. The first preset mode may be a perfect mode.

In some implementation scenarios, when it is determined that the working mode is the first preset mode, a travel path from the current position to the target position can be planned based on the parallel path where the current position is located, the parallel path where the target position is located, and the boundary of the working area.

As shown in Figure 4, during a bow-shaped cutting process in the working area, the self-moving device needs to move from a current position A to a target position B. When a straight-line distance between the current position A and the target position B is greater than the first threshold, and a current working mode of the self-moving device is a perfect mode, a travel path from A to B (a thick line in the figure) can be planned based on a parallel path *l*₁ where the current position A is located, a parallel path *l*₂ where the target position B is located, and the boundary of the working area. The parallel path is a path parallel to a long side in the bow-shaped cutting path (such as a straight line where *l*₁ and *l*₂ are located in the figure). A bow-shaped dashed line in the figure represents a stripe pressed out after a wheel passes.

In an embodiment of the present application, since the parallel path is substantially parallel to the preset cutting direction of the self-moving device in the working area, in the first preset mode, the travel path planned based on the parallel path and the boundary of the working area will only pass through a path parallel to the preset cutting direction and the boundary of the working area, without a scenario of intersecting with a light and dark stripe pressed out by a wheel, thereby avoiding damage to the light and dark stripe pressed out by the wheel and ensuring stripe aesthetics.

Since the planned travel path may be the same each time based on the parallel path where the current position is located, the parallel path where the target position is located, and the boundary of the working area, this may cause the self-moving device to repeatedly travel the same path multiple times, resulting in excessive grass pressing.

To solve the above problem, in some implementation scenarios, before planning the travel path from the current position to the target position based on the parallel path and the boundary of the working area, the boundary of the working area can be processed to a different degree.

In this embodiment, before planning the travel path, the boundary of the working area can be first subjected to inward contraction processing, and then a travel path from the current position to the target position can be planned based on the parallel path and the boundary of the working area after contraction.

Specifically, in some implementation scenarios, planning the travel path from the current position to the target position based on the parallel path and the boundary of the working area comprises: acquiring a preset distance range for adjusting the boundary of the working area; determining a first distance based on the preset distance range; relative to the working area, performing inward contraction processing on the boundary of the working area according to the first distance to obtain an inwardly contracted area; and planning the travel path from the current position to the target position based on the parallel path where the current position is located, the parallel path where the target position is located, and a boundary of the inwardly contracted area. The preset distance range can be set according to an actual scenario, which is not limited by the present application. The preset distance range can be understood as a preset distance range for contracting the boundary of the working area each time. For example, if the preset distance range is [0, 10 cm], then a distance for contracting the boundary of the working area each time needs to be within the range of [0, 10 cm].

In some specific implementation scenarios, determining a first distance based on the preset distance range comprises: randomly selecting a value from the preset distance range as the first distance. That is, the first distance may be a value randomly determined from within the preset distance range.

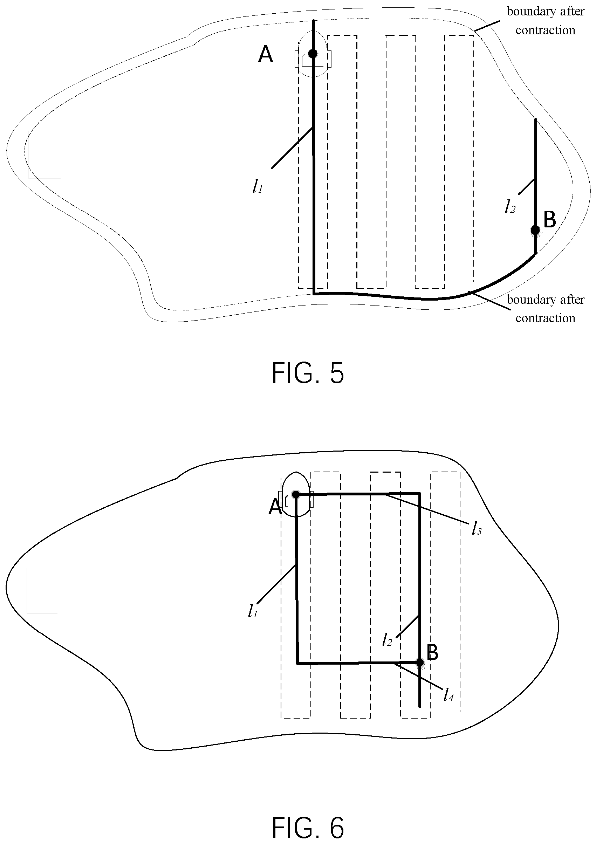

As shown in Figure 5, during a bow-shaped cutting process in the working area, the self-moving device needs to move from a current position A to a target position B. When a straight-line distance between the current position A and the target position B is greater than the first threshold, and a current working mode of the self-moving device is a perfect mode, a value can first be randomly determined from a preset distance range [0, 10 cm] (for example, the randomly determined value is 2 cm), then inward contraction processing is performed on the boundary of the working area based on this value (2 cm), and further a travel path from A to B (a thick line in the figure) is planned based on a parallel path *l*₁ where the current position A is located, a parallel path *l*₂ where the target position B is located, and the boundary of the working area after contraction. The parallel path is a path parallel to a long side in the bow-shaped cutting path (such as a straight line where *l₁* and *l₂* are located in the figure). A bow-shaped dashed line in the figure represents a stripe pressed out after a wheel passes.

In an embodiment of the present application, since the parallel path is substantially parallel to the preset cutting direction of the self-moving device in the working area, the travel path planned based on the parallel path and the boundary of the working area will not have a scenario of intersecting with a light and dark stripe pressed out by a wheel, thereby avoiding damage to the light and dark stripe pressed out by the wheel and ensuring stripe aesthetics. Since a contraction distance for boundary processing is randomly selected from within the preset distance range each time, this can avoid the same planned travel path each time, preventing the self-moving device from repeatedly traveling the same path multiple times and causing excessive grass pressing.

Although randomly selecting the contraction distance for the boundary from within the preset distance range each time can avoid repeatedly traveling the same path multiple times and the problem of excessive grass pressing, a scenario of an inconsistent width between stripes may occur, thereby affecting aesthetics.

To make the stripes more aesthetically pleasing, in other specific implementation scenarios, determining a first distance based on the preset distance range comprises: acquiring a preset expansion width and a number of times the boundary of the working area has been subjected to inward contraction processing; and determining the first distance based on the preset expansion width and the number of times the boundary of the working area has been subjected to inward contraction processing; wherein the first distance is within the preset distance range. The preset expansion width can be understood as a preset distance for contracting the boundary of the working area inward, which can be set according to an actual scenario and is not limited by the present application. For example, the preset expansion width may be 0.1 cm, 0.2 cm, or another value, etc. The number of times the boundary of the working area has been subjected to inward contraction processing can be counted after each time the boundary is subjected to inward contraction processing.

In some implementation scenarios, the first distance is a product of the preset expansion width and the number of times the boundary of the working area has been subjected to inward contraction processing. In this way, based on an increment of a number of boundary inward contraction processings, processing of the boundary of the working area can be implemented sequentially according to a multiple of the preset expansion width, making a width between stripes consistent, thereby making a generated stripe more aesthetically pleasing.

It should be noted that a sum of distances for performing inward contraction processing on the boundary of the working area is maintained within a preset range, or a number of times the boundary of the working area is subjected to inward contraction processing cannot exceed a preset threshold. The preset range and the preset threshold can be set according to an actual scenario, which is not limited herein.

In some embodiments, when the current position and the target position satisfy the preset position relationship, planning a travel path from the current position to the target position based at least on a parallel path further comprises: when the working mode is a second preset mode, planning the travel path from the current position to the target position based on the parallel path and a perpendicular path. The second preset mode may be a fast mode. The perpendicular path represents a path substantially perpendicular to a preset cutting direction of the self-moving device in the working area. For example, the preset cutting direction is a direction where a long side is located when the self-moving device cuts along a Boustrophedon Path. Correspondingly, the parallel path can be understood as a path substantially parallel to the long side in the Boustrophedon Path. The perpendicular path also represents a passable path. In some implementation scenarios, the perpendicular path may include one or more paths. An interval distance between multiple perpendicular paths may be equal or unequal. Preferably, the interval distance between multiple perpendicular paths is equal.

In some implementation scenarios, planning the travel path from the current position to the target position based on the parallel path and the perpendicular path comprises: planning a travel path from the current position to the target position based on a perpendicular path where the current position is located and the parallel path where the target position is located; or planning a travel path from the current position to the target position based on the parallel path where the current position is located and a perpendicular path where the target position is located.

As shown in Figure 6, during a bow-shaped cutting process in the working area, the self-moving device needs to move from a current position A to a target position B. When a straight-line distance between the current position A and the target position B is greater than the first threshold, and a current working mode of the self-moving device is a fast mode, a travel path from A to B (a thick line in the figure) can be planned based on a parallel path *l₁* where the current position A is located and a perpendicular path *l₄* where the target position B is located, or a travel path from A to B (a thick line in the figure) can be planned based on a perpendicular path *l₃* where the current position A is located and a parallel path *l₂* where the target position B is located. The parallel path is a path parallel to a long side in the bow-shaped cutting path (such as a straight line where *l₁* and *l₂* are located in the figure), and the perpendicular path is a path perpendicular to the long side in the bow-shaped cutting path (such as a straight line where *l₃* and *l₄* are located in the figure). A bow-shaped dashed line in the figure represents a stripe pressed out after a wheel passes.

In an embodiment of the present application, since the parallel path is substantially parallel to the preset cutting direction of the self-moving device in the working area, and the perpendicular path is substantially perpendicular to the preset cutting direction of the self-moving device in the working area, in the second preset mode, the travel path planned based on the parallel path and the perpendicular path will only have a horizontal and vertical path, without a scenario of obliquely intersecting or chaotically intersecting with a light and dark stripe pressed out by a wheel. This way, the target position can be quickly reached while considering stripe aesthetics, improving work efficiency.

Since the planned travel path may be the same each time based on the perpendicular path where the current position is located and the parallel path where the target position is located, or based on the parallel path where the current position is located and the perpendicular path where the target position is located, this may cause the self-moving device to repeatedly travel the same path multiple times, resulting in excessive grass pressing. To solve the above problem, in some implementation scenarios, before planning the travel path from the current position to the target position based on the parallel path and the perpendicular path, multiple perpendicular paths can be randomly generated between the current position and the target position, and then a travel path from the current position to the target position can be planned based on the parallel path and the perpendicular path. Here, "multiple" means two or more.

Specifically, in some implementation scenarios, planning the travel path from the current position to the target position based on the parallel path and the perpendicular path comprises: acquiring the parallel path between the current position and the target position; the parallel path at least comprises the parallel path where the current position is located and the parallel path where the target position is located; randomly generating at least one perpendicular path between the current position and the target position; and planning the travel path from the current position to the target position based on the perpendicular path and the parallel path between the current position and the target position. Between the current position and the target position, in addition to the parallel path where the current position is located and the parallel path where the target position is located, another parallel path may also be included, which is not limited by the present application. Between the current position and the target position, the randomly generated perpendicular path may include one or more paths. It should be noted that the parallel path can be set after obtaining the working area map, or can be set before planning the path. The perpendicular path is randomly generated before planning the path.

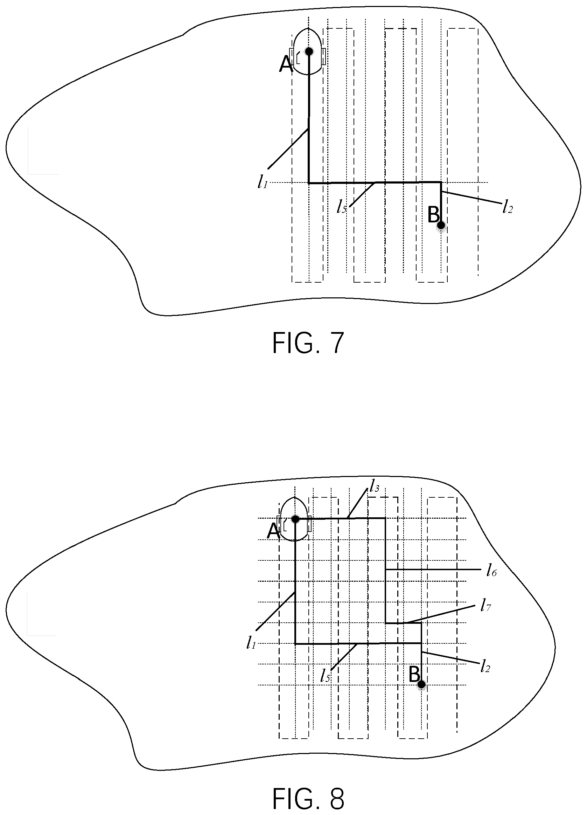

As shown in Figure 7, between the current position and the target position, in addition to the parallel path where the current position is located and the parallel path where the target position is located, multiple parallel paths are also included (such as a thin dashed line in the figure). A perpendicular path randomly generated between the current position and the target position includes one path (such as the thin dashed line in the figure). At this time, the self-moving device can plan a travel path from A to B (a thick line in the figure) based on a parallel path *l₁* where the current position A is located, a parallel path *l₂* where the target position B is located, and a generated perpendicular path *l₅*. The parallel path is a path parallel to a long side in the bow-shaped cutting path (such as a straight line where *l₁* and *l₂* are located in the figure), and the generated perpendicular path is a path perpendicular to the long side in the bow-shaped cutting path (such as a straight line where *l₅* is located in the figure). A bow-shaped dashed line in the figure represents a stripe pressed out after a wheel passes.

As shown in Figure 8, between the current position and the target position, in addition to the parallel path where the current position is located and the parallel path where the target position is located, multiple parallel paths are also included (such as a thin dashed line in the figure). Perpendicular paths randomly generated between the current position and the target position include multiple paths (such as a thin dashed line in the figure). At this time, the self-moving device can plan a travel path from A to B (a thick line in the figure) based on a parallel path *l₁* where the current position A is located, a parallel path *l₂* where the target position B is located, and a generated perpendicular path *l₅*, or can plan a travel path from A to B (a thick line in the figure) based on a perpendicular path *l₃* where the current position A is located, the parallel path *l₂* where the target position B is located, a generated perpendicular path *l₇,* and a parallel path *l₆* between A and B. The parallel path is a path parallel to a long side in the bow-shaped cutting path (such as a straight line where *l₁*, *l₂,* and *l₆* are located in the figure), and the generated perpendicular path is a path perpendicular to the long side in the bow-shaped cutting path (such as a straight line where *l₅* and *l₇* are located in the figure). A bow-shaped dashed line in the figure represents a stripe pressed out after a wheel passes.

Of course, the above is merely exemplary illustration. The self-moving device can also plan a travel path from A to B based on another parallel path and another perpendicular path, which is not limited by the present application.

In an embodiment of the present application, since the perpendicular path is randomly generated between the current position and the target position before planning the path each time, the travel path planned each time based on the perpendicular path and the parallel path between the current position and the target position may be different. This way, the problem of excessive grass pressing caused by the self-moving device repeatedly traveling the same path multiple times can be avoided.

In an embodiment of the present application, when the straight-line distance between the current position and the target position is large, in order to prevent the self-moving device from damaging a light and dark stripe created by a wheel of the self-moving device during movement to the target position, a path planning method is determined according to a mode in which the self-moving device operates. Specifically, if the self-moving device is in a perfect mode, a travel path from the current position to the target position is planned based on the parallel path and the boundary of the working area. This way, the planned travel path can avoid damaging the light and dark stripe, ensuring stripe aesthetics. If the self-moving device is in a fast mode, a travel path from the current position to the target position is planned based on the parallel path and the perpendicular path. This way, the planned travel path can improve work efficiency while considering stripe aesthetics.

In this embodiment, when the current position and the target position do not satisfy the preset position relationship, a shortest path between the current position and the target position is determined as the travel path from the current position to the target position. When the current position and the target position do not satisfy the preset position relationship, this can be understood as when a working mode of the self-moving device is a third preset mode. The shortest path between the current position and the target position can be determined through a preset path search algorithm. It should be noted that the preset path search algorithm is not limited in the embodiment of the present specification.

Specifically, in some embodiments, when the straight-line distance between the current position and the target position is less than or equal to the first threshold, the shortest path from the current position to the target position can be determined through a preset path search algorithm, and then this shortest path is used as the travel path from the current position to the target position.

In an embodiment of the present application, when the straight-line distance between the current position and the target position is large, a travel path from the current position to the target position is planned based at least on a parallel path. When the straight-line distance between the current position and the target position is small, the shortest path between the current position and the target position is directly used as the travel path from the current position to the target position. This way, work efficiency can be improved.

In this embodiment, after planning the travel path from the current position to the target position, the self-moving device can be controlled to move to the target position according to the travel path.

In some embodiments, controlling the self-moving device to move to the target position according to the travel path comprises: acquiring a positioning signal received by the self-moving device; when the positioning signal does not satisfy a preset quality condition, controlling the self-moving device to move to a recovery position, the recovery position being a position where a quality of the positioning signal satisfies the preset quality condition; when confirming movement to the recovery position, recording the recovery position as the current position, and determining whether the current position and the target position satisfy the preset position relationship; and when the preset position relationship is satisfied, planning the travel path from the current position to the target position based at least on the parallel path.

In some implementation scenarios, after planning the travel path from the current position to the target position and during the process of controlling the self-moving device to move to the target position, a positioning signal received by the self-moving device can be acquired.

In a practical application, especially for a positioning module that relies on a satellite navigation system, a quality of a positioning signal is easily affected by an environmental factor. For example, when a self-moving device is in an open area without an obstruction, the quality of a positioning signal of the positioning module is naturally high. Conversely, if the self-moving device is obstructed by a tree or a building, a signal strength of a positioning signal is very weak, and may even cause the positioning module to have difficulty receiving the positioning signal. In such a case, a quality of a positioning signal provided is naturally not high and may be difficult to meet a usage requirement. Therefore, a situation where the positioning signal does not satisfy the preset quality condition may include a case where the self-moving device enters a shadow area or enters a shadow area for a period of time. A shadow area is typically an area where a tree, a building, etc. affects a transmission of a positioning signal.

In some implementation scenarios, when the positioning signal does not satisfy the preset quality condition, a recovery position can be found based on the working area map. The recovery position is a position where a quality of the positioning signal satisfies the preset quality condition.

Further, after determining the recovery position, the self-moving device can be controlled to move to the recovery position. There may be multiple recovery positions. To ensure that the positioning signal of the recovery position satisfies the preset quality condition, the recovery position can typically be selected in an open area or an area far from a boundary.

In some implementation scenarios, when it is confirmed that the self-moving device has moved to the recovery position, the recovery position can be marked as the current position, and then it is determined whether the current position and the target position satisfy the preset position relationship. When the preset position relationship is satisfied, a travel path from the current position to the target position is planned based at least on the parallel path.

In some implementation scenarios, when it is confirmed that the self-moving device has moved to the recovery position, it can also be determined whether the positioning signal at the current recovery position satisfies the preset quality condition. If the preset quality condition is not satisfied, the recovery position can be changed and the self-moving device can be controlled to move to another recovery position. If the preset quality condition is satisfied, the current recovery position can be marked as the current position, and then it is determined whether the current position and the target position satisfy the preset position relationship. The above steps are repeatedly executed. If the positioning signal at the current recovery position still does not satisfy a threshold quality condition when a preset condition is reached, the self-moving device can be controlled to shut down and/or alarm. The preset condition may include a movement time in a shadow area being greater than a time threshold, or may include a number of recovery position changes reaching a preset number, etc., which is not limited by the present application.

It should be noted that the above determination of whether the current position and the target position satisfy the preset position relationship, as well as the method of planning the travel path, are similar to the relevant processes described earlier and can be referenced mutually, which will not be elaborated here.

In an embodiment of the present application, during the process of moving to the target position, by detecting a positioning signal and adjusting the position of the self-moving device when a quality of the positioning signal does not satisfy the preset quality condition, the self-moving device can again obtain a positioning signal that satisfies the preset quality condition, avoiding a work accident caused by an inaccurate positioning signal, thereby improving work safety.

In other embodiments, controlling the self-moving device to move to the target position according to the travel path comprises: acquiring a positioning signal received by the self-moving device; and when the positioning signal does not satisfy the preset quality condition, controlling the self-moving device to sleep, restart, or return to a charging station.

In this embodiment, based on the travel path, during the process of moving to the target position, a positioning signal received by the self-moving device can be acquired. When the positioning signal does not satisfy the preset quality condition, the self-moving device can be directly controlled to sleep, restart, or return to a charging station. This way, when a signal is poor (for example, due to an interference from an ionosphere, an electromagnetic storm, etc., causing a poor signal), controlling a machine to sleep, restart, or return to the charging station can avoid a work accident caused by an inaccurate positioning signal, thereby improving work safety.

In this embodiment, during the process of moving to the target position based on the travel path, an obstacle can be detected.

In some embodiments, controlling the self-moving device to move to the target position according to the travel path comprises: when a collision with an obstacle is detected, taking a first position as the current position, and marking an obstacle position in the working area map to obtain a new working area map; the first position represents a position within a preset range of a collision position; and when the current position and the target position satisfy the preset position relationship, planning the travel path from the current position to the target position based at least on the parallel path.

Specifically, in some implementation scenarios, when a collision with an obstacle is detected, a first position is acquired, and the obstacle position is marked in the working area map to obtain a new working area map. Further, it can be determined whether the current position and the target position satisfy the preset position relationship. When the preset position relationship is satisfied, a travel path from the current position to the target position can be planned based at least on the parallel path. When the preset position relationship is not satisfied, a shortest path between the current position and the target position can be determined as the travel path from the current position to the target position. The first position may represent a position when the self-moving device collides with the obstacle, or may represent a position when the self-moving device retreats a certain distance after colliding with the obstacle, which can be set according to an actual scenario.

In some implementation scenarios, if a path from the first position to the target position cannot be planned, outward expansion processing can be performed on a marking boundary of the obstacle in the new working area map to obtain a first marking boundary. Then, an area surrounded by the marking boundary is removed from an area surrounded by the first marking boundary to obtain a first area, and an overlap area between the first area and a non-parallel path is determined. Further, a position of the overlap area is marked as a passable area to obtain a new working area map. Further, a travel path from the first position to the target position is planned based at least on the parallel path.

Planning a travel path from the first position to the target position may include inputting the first position, the target position, and the new working area map into a preset path search algorithm to calculate a path for moving from the first position to the target position. If the preset path search algorithm can output a path from the current position to the target position, it indicates that path searching is successful. If the preset path search algorithm cannot output a path from the current position to the target position, it indicates that path searching has failed. The preset path search algorithm can be set according to an actual scenario, which is not limited by the present application.

Specifically, during the process of moving toward the target position, the self-moving device can detect whether a collision occurs through a collision sensor. When a collision is confirmed, the self-moving device is controlled to retreat a certain distance so that the self-moving device has a space to turn, thereby facilitating subsequent movement toward the target position. Then, obstacle marking can be performed in the working area map to obtain a new working area map. Further, when it is confirmed that the current position of the self-moving device and the target position satisfy the preset position relationship, a travel path from the current position to the target position is planned based at least on the parallel path.

If path searching is successful, movement toward the target position is performed according to the path.

If path searching fails, outward expansion processing can be performed on a marking boundary of the obstacle in the new working area map to obtain a first marking boundary. Then, an area surrounded by the marking boundary can be removed from an area surrounded by the first marking boundary to obtain a first area. Further, an overlap portion between the first area and a non-parallel path in the new working area map is determined, and in the new working area map, a position corresponding to the overlap portion is marked as a passable area to re-obtain a new working area map. After re-obtaining the new working area map, the current position, the target position, and the new working area map can be input into a preset path search algorithm to calculate a path for moving from the current position to the target position.

In this embodiment, when path searching fails, by performing outward expansion processing on the boundary of the obstacle, determining an overlap portion between an expanded area and a non-parallel path, and marking a position corresponding to the overlap portion as a passable area in the working area map, a subsequent successful path search can be ensured. Additionally, by removing the overlap portion between an obstacle expansion area (i.e., the expanded area) and a non-parallel path, a machine can travel along an obstacle edge without having to detour to the boundary of the entire working area, thereby improving efficiency.

In an embodiment of the present application, during the process of moving to the target position, by detecting an obstacle, the position of the self-moving device can be timely adjusted when a collision occurs, thereby enabling the self-moving device to quickly reach the target position and improving work efficiency.

Based on the same inventive concept, an embodiment of the present application also provides a control method for a self-moving device to reduce damage to a light and dark stripe. The self-moving device is configured to move and/or operate in a working area. The method can be applied to a self-moving device, specifically, to a control module in the self-moving device. Of course, in some cases, the method can also be applied to a server deployed on a network side and capable of controlling an operation process of the self-moving device.

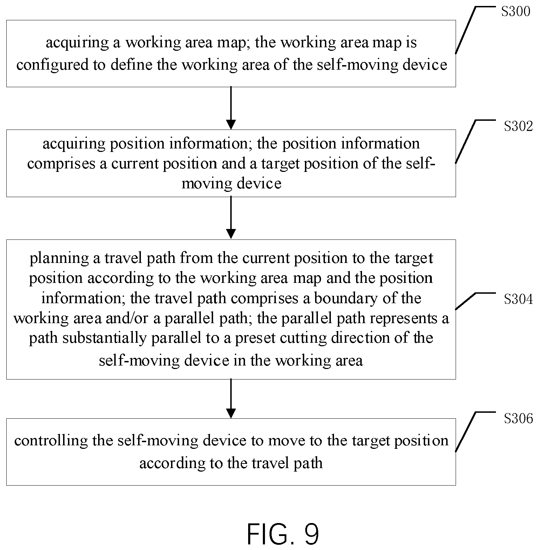

As shown in Figure 9, the control method for a self-moving device provided by this embodiment may include the following steps.
S300: acquiring a working area map; the working area map is configured to define the working area of the self-moving device;
S302: acquiring position information; the position information comprises a current position and a target position of the self-moving device;
S304: planning a travel path from the current position to the target position according to the working area map and the position information; the travel path comprises a boundary of the working area and/or a parallel path; the parallel path represents a path substantially parallel to a preset cutting direction of the self-moving device in the working area;
S306: controlling the self-moving device to move to the target position according to the travel path.

It should be noted that this embodiment has basically the same implementation as the aforementioned embodiment, and specific reference can be made to the description of the aforementioned embodiment, which will not be elaborated here. This embodiment differs from the aforementioned embodiment in that this embodiment may include a scenario where the planned travel path only includes the boundary of the working area.

Specifically, for example, in some implementation scenarios, when both the current position and the target position are located on the boundary of the working area, when planning a travel path from the current position to the target position according to the working area map and the position information, the boundary of the working area from the current position to the target position can be directly used as the travel path from the current position to the target position. Preferably, a shorter boundary of the working area from the current position to the target position is used as the travel path from the current position to the target position.

Of course, in some embodiments, the travel path may include a perpendicular path in addition to a parallel path, for which reference can be made to the description of the aforementioned embodiment.

In an embodiment of the present application, based on the parallel path and/or the boundary of the working area, the planned travel path will only pass through a path parallel to the preset cutting direction and/or the boundary of the working area, without a scenario of intersecting with a light and dark stripe pressed out by a wheel, thereby avoiding damage to the light and dark stripe pressed out by the wheel and ensuring overall stripe aesthetics.

Based on the same inventive concept, an embodiment of the present application also provides a control method for a self-moving device to reduce damage to a light and dark stripe. The self-moving device is configured to move and/or operate in a working area. The method can be applied to a self-moving device, specifically, to a control module in the self-moving device. Of course, in some cases, the method can also be applied to a server deployed on a network side and capable of controlling an operation process of the self-moving device.

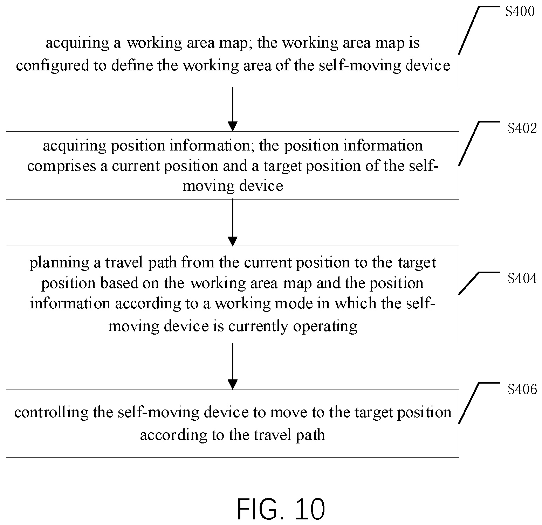

As shown in Figure 10, the control method for a self-moving device provided by this embodiment may include the following steps.
S400: acquiring a working area map; the working area map is configured to define the working area of the self-moving device;
S402: acquiring position information; the position information comprises a current position and a target position of the self-moving device;
S404: planning a travel path from the current position to the target position based on the working area map and the position information according to a working mode in which the self-moving device is currently operating;
S406: controlling the self-moving device to move to the target position according to the travel path.

It should be noted that this embodiment has basically the same implementation as the aforementioned embodiment, and specific reference can be made to the description of the aforementioned embodiment, which will not be elaborated here. This embodiment differs from the aforementioned embodiment in that when planning the travel path, this embodiment determines based on the working mode in which the self-moving device is currently operating.

In some embodiments, a working mode of the self-moving device may include a first preset mode, a second preset mode, a third preset mode, etc. The first preset mode may be a traceless mode (also referred to as Stripes-Safe, stripe safety). The second preset mode may be a low-trace mode (also referred to as OrthoPath, orthogonal path). The third preset mode may be a shortest mode (also referred to as FastTrack, fast track). Of course, according to an actual scenario, the working mode of the self-moving device may also include another mode, which is not limited by the present application.

In some embodiments, before planning a travel path from the current position to the target position based on the working area map and the position information according to the working mode in which the self-moving device is currently operating, the working mode in which the self-moving device is currently operating can be determined.

In some embodiments, determining the working mode in which the self-moving device is currently operating comprises: receiving a control instruction indicating the working mode of the self-moving device; and comparing the control instruction with a prestored instruction to determine the working mode in which the self-moving device is currently operating; the self-moving device prestores a correspondence relationship between a working mode and a control instruction.

Specifically, for example, in some implementation scenarios, the self-moving device can communicate with a user terminal (such as an APP), so that a user can send a control instruction indicating a working mode to the self-moving device through the user terminal. For example, a button corresponding to a working mode is set on the user terminal, and by triggering a corresponding button, the user causes the user terminal to send a control instruction indicating the working mode to the self-moving device. Further, after receiving a control instruction, the self-moving device can compare the control instruction with a prestored instruction to determine the current working mode. Since a correspondence relationship between a working mode and a control instruction is prestored in the self-moving device, after receiving a control instruction sent by the user terminal, the working mode can be determined according to the control instruction.

For example, in other implementation scenarios, an information setting module is provided on a body of the self-moving device, and a user can set operation information of the self-moving device by operating the module, such as a working time, a working area, a working mode, etc. Specifically, a user can select a working mode of the self-moving device by operating the information setting module. When the user has selected a working mode and triggers a confirm button, a control module of the self-moving device can receive a control instruction indicating the working mode, and then the control module can compare the control instruction with a prestored instruction to determine the current working mode.

In other embodiments, determining the working mode in which the self-moving device is currently operating comprises: determining the working mode in which the self-moving device is currently operating according to a position relationship between the current position and the target position. Specifically, in some implementation scenarios, the working mode in which the self-moving device is currently operating can be determined according to whether the current position and the target position satisfy a preset position relationship.

Specifically, for example, in some implementation scenarios, a straight-line distance between the current position and the target position can be calculated, and when the straight-line distance is less than or equal to a first threshold, it is determined that the self-moving device is currently in a shortest mode.

In some implementation scenarios, when the straight-line distance between the current position and the target position is greater than the first threshold, a perpendicular distance from the current position to a parallel path where the target position is located can be calculated. When the perpendicular distance is greater than a second threshold, it is determined that the self-moving device is currently in a traceless mode. When the perpendicular distance is less than or equal to the second threshold, it is determined that the self-moving device is currently in a low-trace mode. The first threshold and the second threshold can be set according to an actual scenario, which is not limited by the present specification.

Of course, the above is merely exemplary illustration of an embodiment where the working mode can be determined through a direction of a user selection or through an automatic selection method. The present application can also determine the working mode in which the self-moving device is currently operating through another method, which is not limited herein.

It should be noted that by default, the self-moving device is in a shortest mode. For example, in some implementation scenarios, if a current mode of the self-moving device cannot be confirmed (for example, a communication between the user terminal and the self-moving device is interrupted, or an information setting module on the self-moving device experiences an abnormality, or a user has not selected a working mode, etc.), the self-moving device can be considered to be in the shortest mode, and the travel path is planned based on a strategy corresponding to the shortest mode.

In this embodiment, after determining the working mode in which the self-moving device is currently operating, a travel path from the current position to the target position can be planned based on the working area map and the position information.

Specifically, in some embodiments, when it is determined that the self-moving device is currently in a traceless mode, a travel path from the current position to the target position can be planned based on the parallel path where the current position is located, the parallel path where the target position is located, and the boundary of the working area.

In some embodiments, when it is determined that the self-moving device is currently in a low-trace mode, a travel path from the current position to the target position can be planned based on the parallel path and a perpendicular path. The parallel path represents a path substantially parallel to a preset cutting direction of the self-moving device in the working area. The perpendicular path represents a path substantially perpendicular to the preset cutting direction.

In some embodiments, when it is determined that the self-moving device is currently in a shortest mode, a shortest path between the current position and the target position can be determined based on a preset path search algorithm, and then the shortest path is determined as the travel path from the current position to the target position.

In the above embodiment, in the traceless mode, the planned travel path can avoid damage to a light and dark stripe, ensuring overall stripe aesthetics. In the low-trace mode, the planned travel path can improve work efficiency while considering stripe aesthetics. In the shortest mode, the planned travel path can improve work efficiency.

It should be noted that the above description only addresses the differences between this embodiment and the aforementioned embodiment. For the same implementation method between this embodiment and the aforementioned embodiment, specific reference can be made to the description of the aforementioned embodiment, which will not be elaborated here.

The technical solution provided by an embodiment of the present application can be applied not only to a scenario such as an area transfer and a return, but also to a scenario of moving from one position point to another position point.

In addition, the technical solution provided by an embodiment of the present application can be applied on flat ground and also on a slope.

In some embodiments, during movement, if the self-moving device detects that the self-moving device is approaching a boundary of the working area, the self-moving device can determine a distance between the self-moving device and the boundary. When at a certain distance from the boundary, the self-moving device is controlled to make a slight turn inward toward the boundary so that a traveling direction aligns with an extension direction of the boundary, then the self-moving device is controlled to travel a certain distance along the extension direction of the boundary, and finally the self-moving device is controlled to turn inward toward the boundary again. The distance between the self-moving device and the boundary can be determined through data collected by a sensor (such as an ultrasonic sensor, an image sensor, etc.), or a distance between a signal point and a receiving point can be determined through a signal strength of a Received Signal Strength Indication (RSSI). Of course, the distance to the boundary can also be determined through another method, which is not limited by the present application.

It should be noted that when the above method is applied on flat ground, traveling a certain distance along the boundary after encountering the boundary can achieve a quick exit from a narrow area. When applied on a slope, traveling a certain distance along the boundary after encountering the boundary helps enhance a power and a traction of the self-moving device when turning, enabling the self-moving device to gain a speed (or an acceleration) to return to the slope, thereby reducing slippage. When the self-moving device is located on a slope, on one hand, due to gravity, a situation may occur where a traction force of a driving wheel of the self-moving device is less than a downward component of gravity along the slope, causing the self-moving device to slip or overturn. On the other hand, due to a low deck design (and a longer length) of some self-moving devices, a traction torque/force is poorest under a slope condition (especially when climbing), which may cause the self-moving device to fall or detach from a perimeter.

In some implementation scenarios, an automatic lawn mower has a boundary sensing element located on both sides of a housing. After traveling a certain distance, the automatic lawn mower will hit a boundary line. When hitting the line non-perpendicularly, the boundary sensing element on one side will first hit the line and send a line-hitting signal to a control module. The control module determines an angular relationship between a central axis of the mower and the boundary line, and then controls a traveling module to turn in a direction that reduces an acute or right angle between the central axis and the boundary line. During or after turning, the boundary sensing element that originally crossed the boundary line returns to within the boundary, and when another boundary sensing element is still outside the boundary, a turning process stops and travel along the boundary line begins.

When traveling along the boundary line, the control module constantly corrects the traveling direction to ensure that the aforementioned one boundary sensing element is located within the boundary and the aforementioned other boundary sensing element is located outside the boundary, i.e., ensuring that magnetic field directions sensed by two inductors are opposite. This way, the automatic lawn mower always has one side within the boundary and another side outside the boundary, achieving travel straddling the boundary line along the line.

After traveling along the boundary line for a preset distance, the control module of the automatic lawn mower controls the traveling module to turn again, leaving the boundary line and returning within the boundary. This turning direction continues a direction of a first turn, and a turning angle is less than or equal to 90 degrees.

The above turning method generally involves 3 steps, namely a first turn, traveling along the line, and a second turn. However, omitting the first step is also feasible, i.e., the automatic lawn mower directly enters a line-traveling state after hitting the line, achieving an effect of the first turn by correcting an orientation of line travel. In this embodiment, it is necessary to maintain that the above specific turning and folding processes are merely exemplary and can have various modified forms, which is not limited by the present application.

For example, the method of traveling along the boundary line can be a cross-line travel in this embodiment, but can also be traveling at a predetermined distance close to the boundary line. The preset distance for traveling along the boundary line can be 20 centimeters to 100 centimeters, or can be 2 meters to 3 meters. The preset distance can be changed accordingly according to a working nature of the self-moving device, a size and a shape characteristic of a map, and can also be freely set by an operator.

It should be understood that although the various steps in the flowcharts of the drawings are shown sequentially according to the arrows, these steps are not necessarily executed sequentially in the order indicated by the arrows. Unless explicitly stated herein, the execution of these steps does not have a strict order limitation, and these steps may be executed in another order. Moreover, at least some of the steps in the drawings may include multiple steps or multiple stages, which are not necessarily executed at the same time, but may be executed at different times. The execution order of these steps or stages is also not necessarily sequential, but may be executed in turn or alternately with another step or at least part of a step or a stage in another step.

Based on the same inventive concept, an embodiment of the present application also provides a control apparatus for a self-moving device. An implementation solution for solving a problem provided by this control apparatus is similar to an implementation solution recorded in the above control method. Therefore, a specific limitation in a control apparatus embodiment provided below can refer to the limitation on the method above, which will not be elaborated here.

A control apparatus for a self-moving device provided by an embodiment of the present application, wherein the self-moving device is configured to move and/or operate in a working area, the apparatus comprising:
a first acquisition module, configured to acquire a working area map; the working area map is configured to define the working area of the self-moving device;
a second acquisition module, configured to acquire position information; the position information comprises a current position and a target position of the self-moving device;
a planning module, configured to, when the current position and the target position satisfy a preset position relationship, plan a travel path from the current position to the target position based at least on a parallel path; the parallel path represents a path substantially parallel to a preset cutting direction of the self-moving device in the working area; and
a control module, configured to control the self-moving device to move to the target position according to the travel path.

Based on the same inventive concept, an embodiment of the present application also provides a self-moving device. An implementation solution for solving a problem provided by this device is similar to an implementation solution recorded in the above control method. Therefore, a specific limitation in a device embodiment provided below can refer to the limitation on the method above, which will not be elaborated here.

A self-moving device provided by an embodiment of the present application comprises:
a processor;
a memory, configured to store an executable instruction of the processor; and
the processor, configured to execute the control method for a self-moving device according to any of the above.

It should be noted that the various modules in the above apparatus can be implemented entirely or partially through software, hardware, and a combination thereof. The above modules may be embedded in a hardware form in or independent of a processor in a computer device, or may be stored in a software form in a memory in the computer device for the processor to call and execute an operation corresponding to the above modules.

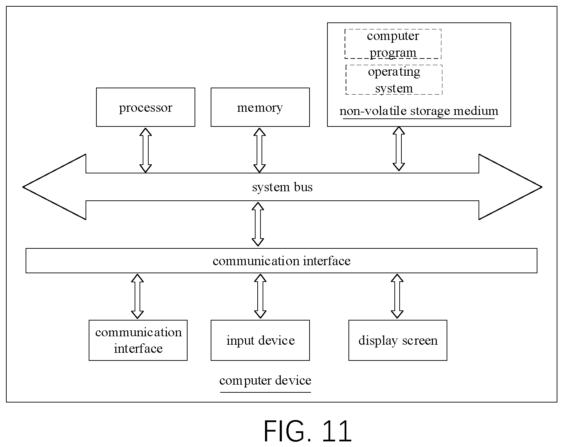

In another embodiment, the present application also provides a computer device, which may be a terminal or a system, such as a software control system of a self-moving device, and an internal structure diagram of the computer device may be as shown in Figure 11. The computer device includes a processor, a memory, a communication interface, a display screen, and an input device connected through a system bus. The processor of the computer device is configured to provide a computing and control capability. The memory of the computer device includes a non-volatile storage medium and an internal memory. The non-volatile storage medium stores an operating system and a computer program. The internal memory provides an environment for an operation of the operating system and the computer program in the non-volatile storage medium. The communication interface of the computer device is configured for a wired or wireless communication with an external terminal, where a wireless communication can be implemented through WIFI, a mobile cellular network, NFC (Near Field Communication), or another technology. When the computer program is executed by the processor, the computer program implements the method of any method embodiment of the present application. The display screen of the computer device may be a liquid crystal display screen or an electronic ink display screen, and the input device of the computer device may be a touch layer covering the display screen, or may be a key, a trackball, or a touchpad provided on a housing of the computer device, or may be an external keyboard, a touchpad, or a mouse, etc.

A person skilled in the art can understand that the structure shown in Figure 11 is merely a block diagram of a partial structure related to a solution of the present application, and does not constitute a limitation on the computer device to which the solution of the present application is applied. A specific computer device may include more or fewer components than shown in the figure, or may combine certain components, or may have a different component arrangement.

In one embodiment, the present application also provides a computer-readable storage medium storing a computer program, which when executed by a processor implements the steps in the above method embodiments.

In one embodiment, the present application also provides a computer program product comprising a computer program, which when executed by a processor implements the steps in the above method embodiments.

A person of ordinary skill in the art can understand that implementing all or part of a process in the method of the above embodiment can be completed by instructing related hardware through a computer program. The computer program can be stored in a non-volatile computer-readable storage medium. When the computer program is executed, the computer program may include the process of the embodiment of the above method. Any reference to a memory, a database, or another medium used in the embodiment provided by the present application may include at least one of a non-volatile and a volatile memory. The non-volatile memory may include a Read-Only Memory (ROM), a magnetic tape, a floppy disk, a flash memory, an optical memory, a high-density embedded non-volatile memory, a Resistive Random Access Memory (ReRAM), a Magnetoresistive Random Access Memory (MRAM), a Ferroelectric Random Access Memory (FRAM), a Phase Change Memory (PCM), a graphene memory, etc. The volatile memory may include a Random Access Memory (RAM) or an external cache memory, etc. As an illustration rather than a limitation, RAM may be in various forms, such as a Static Random Access Memory (SRAM) or a Dynamic Random Access Memory (DRAM), etc. A database involved in the embodiment provided by the present application may include at least one of a relational database and a non-relational database. The non-relational database may include a blockchain-based distributed database, etc., but is not limited thereto. A processor involved in the embodiment provided by the present application may be a general-purpose processor, a central processing unit, a graphics processing unit, a digital signal processor, a programmable logic device, a quantum computing-based data processing logic device, etc., but is not limited thereto.

It should be noted that in the present application, when an element is referred to as being "fixed to" another element, the element may be directly on the other element or an intervening element may also be present. When an element is considered to be "connected" to another element or an element is "connected" to another element, the element may be directly connected to the other element or an intervening element may be present simultaneously, and it should be understood broadly, for example, the connection may be a fixed connection, a detachable connection, or an integral connection; the connection may be a mechanical connection or an electrical connection. For a person of ordinary skill in the art, a specific meaning of the above term in the present invention can be understood according to a specific circumstance.

The terms "vertical", "horizontal", "left", "right", "upper", "lower", "front", "rear", "circumferential", "traveling direction" and similar expressions used herein are based on an orientation or a positional relationship shown in the drawings, and are merely for the convenience of describing the present invention and simplifying the description, rather than indicating or implying that a referred apparatus or element must have a specific orientation, be constructed and operated in a specific orientation, and therefore should not be understood as a limitation on the present invention.

Unless otherwise defined, a technical and a scientific term used herein may have the same meaning as commonly understood by a person skilled in the art to which the present invention belongs. The terms used herein in the specification of the present invention are only for the purpose of describing a specific embodiment and are not intended to limit the present invention. The terms "and/or" and "at least one of" used herein include any and all combinations of one or more related listed items.

The technical features of the above embodiments may also be combined arbitrarily. To keep the description concise, not all possible combinations of the technical features in the above embodiments have been described. However, as long as there is no contradiction in the combination of these technical features, the combinations should all be considered as falling within the scope recorded in this specification.

The above-described embodiments merely express several implementation methods of the present application, and their descriptions are relatively specific and detailed, but should not be understood as limitations on the patent scope of the present application. It should be noted that for a person of ordinary skill in the art, several modifications and improvements can be made without departing from the concept of the present application, and these all fall within the protection scope of the present application. Therefore, the protection scope of the present application should be determined by the appended claims.

## Claims

1. A control method for a self-moving device, the self-moving device being configured to move and/or operate in a working area, **characterized in that** the method comprises:
acquiring a working area map; the working area map is configured to define the working area of the self-moving device;
acquiring position information; the position information comprises a current position and a target position of the self-moving device;
when the current position and the target position satisfy a preset position relationship, planning a travel path from the current position to the target position based at least on a parallel path; the parallel path represents a path substantially parallel to a preset cutting direction of the self-moving device in the working area; and
controlling the self-moving device to move to the target position according to the travel path.

2. The method according to claim 1, **characterized in that** satisfying the preset position relationship by the current position and the target position comprises that a straight-line distance between the current position and the target position is greater than a first threshold.

3. The method according to claim 2, **characterized in that** when the current position and the target position satisfy the preset position relationship, planning a travel path from the current position to the target position based at least on a parallel path comprises:
determining a working mode in which the self-moving device is currently operating; and
when the working mode is a first preset mode, planning the travel path from the current position to the target position based on the parallel path and a boundary of the working area.

4. The method according to claim 3, **characterized in that** determining the working mode in which the self-moving device is currently operating comprises:
receiving a control instruction indicating the working mode of the self-moving device; and
comparing the control instruction with a prestored instruction to determine the working mode in which the self-moving device is currently operating; the self-moving device prestores a correspondence relationship between the working mode and the control instruction.

5. The method according to claim 3, **characterized in that** planning the travel path from the current position to the target position based on the parallel path and the boundary of the working area comprises:
acquiring a preset distance range for adjusting the boundary of the working area;
determining a first distance based on the preset distance range;
relative to the working area, performing inward contraction processing on the boundary of the working area according to the first distance to obtain an inwardly contracted area; and
planning the travel path from the current position to the target position based on the parallel path where the current position is located, the parallel path where the target position is located, and a boundary of the inwardly contracted area.

6. The method according to claim 3, **characterized in that** the method further comprises:
when the working mode is a second preset mode, planning the travel path from the current position to the target position based on the parallel path and a perpendicular path; wherein the perpendicular path represents a path substantially perpendicular to the preset cutting direction.

7. The method according to claim 6, **characterized in that** planning the travel path from the current position to the target position based on the parallel path and the perpendicular path comprises:
acquiring the parallel path between the current position and the target position; the parallel path at least comprises the parallel path where the current position is located and the parallel path where the target position is located;
randomly generating at least one perpendicular path between the current position and the target position; and
planning the travel path from the current position to the target position based on the perpendicular path and the parallel path between the current position and the target position.

8. The method according to claim 2, **characterized in that** the method further comprises:
when the current position and the target position do not satisfy the preset position relationship, determining a shortest path between the current position and the target position as the travel path from the current position to the target position.

9. The method according to claim 1, **characterized in that** controlling the self-moving device to move to the target position according to the travel path comprises:
acquiring a positioning signal received by the self-moving device;
when the positioning signal does not satisfy a preset quality condition, controlling the self-moving device to move to a recovery position, the recovery position being a position where a quality of the positioning signal satisfies the preset quality condition;
when confirming movement to the recovery position, recording the recovery position as the current position, and determining whether the current position and the target position satisfy the preset position relationship; and
when the preset position relationship is satisfied, planning the travel path from the current position to the target position based at least on the parallel path.

10. The method according to claim 1, **characterized in that** controlling the self-moving device to move to the target position according to the travel path comprises:
acquiring a positioning signal received by the self-moving device; and
when the positioning signal does not satisfy a preset quality condition, controlling the self-moving device to sleep, restart, or return to a charging station.

11. The method according to claim 1, **characterized in that** controlling the self-moving device to move to the target position according to the travel path comprises:
when a collision with an obstacle is detected, taking a first position as the current position, and marking an obstacle position in the working area map to obtain a new working area map; the first position represents a position within a preset range of a collision position; and
when the current position and the target position satisfy the preset position relationship, planning the travel path from the current position to the target position based at least on the parallel path.

12. A control method for a self-moving device, the self-moving device being configured to move and/or operate in a working area, **characterized in that** the method comprises:
acquiring a working area map; the working area map is configured to define the working area of the self-moving device;
acquiring position information; the position information comprises a current position and a target position of the self-moving device;
planning a travel path from the current position to the target position according to the working area map and the position information; the travel path comprises a boundary of the working area and/or a parallel path; the parallel path represents a path substantially parallel to a preset cutting direction of the self-moving device in the working area; and
controlling the self-moving device to move to the target position according to the travel path.

13. A control method for a self-moving device, the self-moving device being configured to move and/or operate in a working area, **characterized in that** the method comprises:
acquiring a working area map; the working area map is configured to define the working area of the self-moving device;
acquiring position information; the position information comprises a current position and a target position of the self-moving device;
planning a travel path from the current position to the target position based on the working area map and the position information according to a working mode in which the self-moving device is currently operating; and
controlling the self-moving device to move to the target position according to the travel path.

14. A control apparatus for a self-moving device, the self-moving device being configured to move and/or operate in a working area, **characterized in that** the apparatus comprises:
a first acquisition module, configured to acquire a working area map; the working area map is configured to define the working area of the self-moving device;
a second acquisition module, configured to acquire position information; the position information comprises a current position and a target position of the self-moving device;
a planning module, configured to, when the current position and the target position satisfy a preset position relationship, plan a travel path from the current position to the target position based at least on a parallel path; the parallel path represents a path substantially parallel to a preset cutting direction of the self-moving device in the working area; and
a control module, configured to control the self-moving device to move to the target position according to the travel path.

15. A computer-readable storage medium, **characterized in that** the storage medium stores a computer program, the computer program being configured to execute the method according to any one of claims 1 to 13.

16. A self-moving device, **characterized by** comprising:
a processor;
a memory, configured to store executable instructions of the processor; and
the processor, configured to execute the method according to any one of claims 1 to 13.
